(19) Europäisches Patentamt
European Patent Office
Office européen des brevets

(11) Veröffentlichungsnummer: **0 074 048**
**B1**

(12) # EUROPÄISCHE PATENTSCHRIFT

(45) Veröffentlichungstag der Patentschrift: **26.02.86**

(51) Int. Cl.⁴: **C 09 B 29/44**, C 09 B 33/12 // D06P1/18

(21) Anmeldenummer: **82107949.8**

(22) Anmeldetag: **30.08.82**

(54) **Farbstoffe mit Isochinolin-Kupplungskomponenten.**

(30) Priorität: **05.09.81 DE 3135330**

(43) Veröffentlichungstag der Anmeldung: **16.03.83 Patentblatt 83/11**

(45) Bekanntmachung des Hinweises auf die Patenterteilung: **26.02.86 Patentblatt 86/9**

(84) Benannte Vertragsstaaten: **CH DE FR GB IT LI**

(56) Entgegenhaltungen:
**DE-A-2 100 723**
**DE-A-2 145 028**
**FR-A-2 097 125**
**FR-A-2 110 435**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Radtke, Volker, Dr., Barbarossastrasse 4, D-6733 Hassloch (DE)**
Erfinder: **Kowarsch, Heinrich, Dr., Kuernbacher Strasse 34, D-7519 Oberderdingen (DE)**
Erfinder: **Hahn, Erwin, Dr., Am Buechsenackerhang 31, D-6900 Heidelberg (DE)**
Erfinder: **Hauser, Peter, Dr., Tilsiter Strasse 5, D-6703 Limburgerhof (DE)**

**EP 0 074 048 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft Verbindungen der allgemeinen Formel I

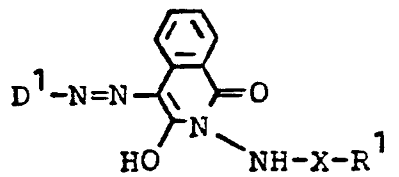

I ,

in der
$D^1$ gegebenenfalls durch Chlor, Brom, Nitro oder Methoxy substituiertes Phenyl oder 1-Anthrachinoyl,
$R^1$ Methyl oder gegebenenfalls durch Chlor, Brom oder Benzoylamino substituiertes Phenyl und
X CO order $SO_2$ sind.

Einzelne wichtige Diazokomponenten sind beispielsweise:
o-Nitranilin, p-Chlor-o-nitranilin, p-Methoxy-o-nitranilin, 2,5-Dichloranilin oder 1-Aminoanthrachinon.
Zur Herstellung der Verbindungen der Formel I kann man eine Diazoniumverbindung von Aminen der Formel

$$D^1{-}NH_2$$

mit Kupplungskomponenten der Formel II

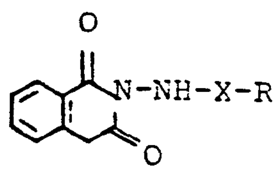

II

umsetzen. Diazotierung und Kupplung werden wie üblich durchgeführt. Einzelheiten können den Beispielen entnommen werden, in denen sich Angaben über Teile und Prozente, sofern nicht anders vermerkt, auf das Gewicht beziehen.

Verbindungen der Formel II und ihre Herstellung sind teilweise aus der Literatur, z. B.
Bull. Chem. Soc. Jpn. *48,* 2915 (1975) und
J. Heterocycl. Chem. *6,* 9 (1969)
bekannt.

Neue Verbindungen der Formel II können analog hergestellt werden.

Die Verbindungen der Formel I haben überwiegend gelbe Farbtöne und eignen sich vorwiegend in Abhängigkeit von ihren Löslichkeiten als Pigmente in Druckfarben und Lacken.

Aus der DE-A-2 100 723 sind strukturell ähnliche sulfonsäuregruppenhaltige Farbstoffe bekannt. Es war nicht vorhersehbar, daß der Verzicht auf die Sulfonsäuregruppe aus den Verbindungen des Standes der Technik Pigmente machen würde, die in Druckfarben und Lacken brauchbar sind.

### Beispiel 1

13,8 Teile o-Nitranilin werden in 35 Teilen Wasser und 25 Raumteilen 32 %iger Salzsäure über Nacht bei Raumtemperatur verrührt. Dann füllt man mit W Eiswasser auf 270 Raumteile auf und gibt bei 0 °C 32 Teile 23 %ige Natriumnitritlösung schnell zu. Nach zweistündigem Rühren wird das überschüssige Nitrit mit Amidosulfonsäure zerstört und das Gemisch abfiltriert.

In diese Diazoniumsalzlösung gießt man bei 0 °C eine Mischung von 28 Teilen der Kupplungskomponente der Formel

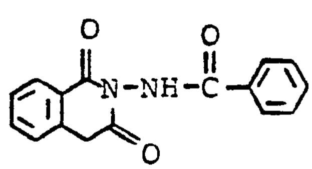

und 1500 Teilen Wasser sowie 50 Teilen 50 %iger NaOH. Man stellt den pH-Wert auf 4 – 5 und rührt 2 Stunden nach. Der Niederschlag wird abgesaugt, mit Wasser und wenig kaltem Methanol gewaschen. man erhält nach dem Trocknen 36 Teile eines gelben Pulvers.

Weitere Pigmente werden erhalten, wenn man die in der folgenden Tabelle angegebenen Diazokomponenten wie in *Beispiel 1* mit den aufgeführten Kupplungskomponenten umsetzt.

| Bsp. | Diazokomponente | Kupplungskomponente | Farbton |
|---|---|---|---|
| 2 | 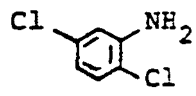 | " | stark grün-st. gelb |
| 3 | 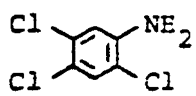 | " | grünst. gelb |
| 4 | 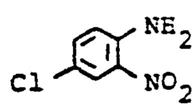 | 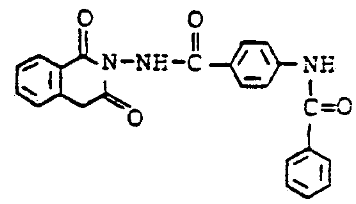 | rotst. gelb |
| 5 | " | 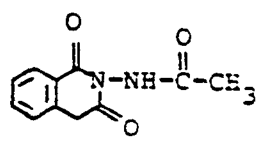 | rotst. gelb |

**Beispiel 6**

138 Teile o-Nitranilin löst man in einem Gemisch aus 850 Raumteilen Ameisensäure und 150 Raumteilen Propionsäure. Während etwa 1,5 Stunden tropft man bei 0 – 5 °C 160 Teile Nitrosylschwefelsäure zu. Überschüssiges Nitrit Wird mit Amidosulfonsäure zerstört.

Die Diazoniumsalzlösung läßt man nun bei 0 °C in eine filtrierte Mischung aus 316 Teilen der Kupplungskomponente der Formel

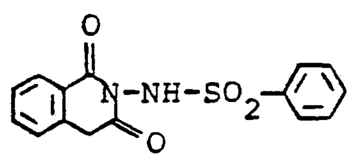 ,

15000 Raumteilen Wasser und 500 Raumteilen 50 %iger Natronlauge einfließen. Den pH-Wert stellt man mit NaOH auf 5 – 6 und läßt ca. eine Stunde nachrühren. Nach dem Absaugen des Niederschlages wäscht man mit kaltem Wasser salzfrei und trocknet unter vermindertem Druck bei 60 °C. Man erhält so 385 Teile eines gelben Pulvers.

Weitere Pigmente werden erhalten, wenn die nachstehend beschriebenen Diazo- und Kupplungskomponenten wie in *Beispiel 1 oder 6* umgesetzt werden.

| Bsp. | Diazokomponente | Kupplungskomponente | Farbton |
|---|---|---|---|
| 7 | 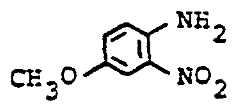 | 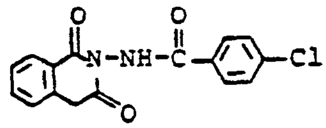 | orange |
| 8 | 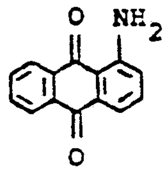 | 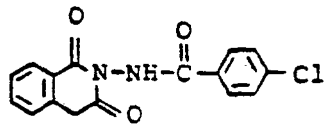 | orange |
| 9 | " | 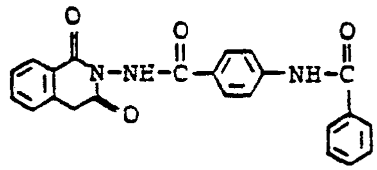 | orange |

**Beispiel 10**

Druckfarbe

5 Teile des gemäß Beispiel 1 erhaltenen Farbstoffes, 30 – 40 Teile Harz (z. B. mit Phenolformaldehyd modifiziertes Kolophoniumharz) und 65 Teile Toluol werden in einem Dispergieraggregat innig vermischt. Man erhält so eine Toluoltiefdruckfarbe im Normgelbbereich von guter Lichtechtheit und Farbstärke.

## Patentansprüche

1. Verbindungen der allgemeinen Formel

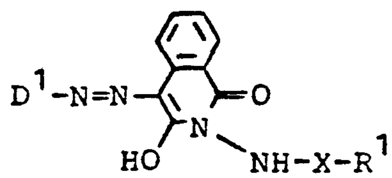

in der

$D^1$ gegebenenfalls durch Chlor, Brom, Nitro oder Methoxy substituiertes Phenyl oder 1-Anthrachinoyl,
$R^1$ Methyl oder gegebenenfalls durch Chlor, Brom oder Benzoylamino substituiertes Phenyl und
X CO oder $SO_2$ sind.

2. Verwendung der Verbindungen gemäß Anspruch 1 als Pigmente insbesondere in Druckfarben.

## Claims

1. A compound of the general formula

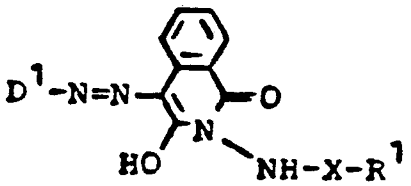

where
$D^1$ is 1-anthraquinoyl or phenyl which is unsubstituted or substituted by chlorine, bromine, nitro or methoxy,
$R^1$ is methyl or is phenyl which is unsubstituted or substituted by chlorine, bromine or benzoylamino, and
X is CO or $SO_2$.

2. The use of a compound as claimed in claim 1 as a pigment, in particular in a printing ink.

## Revendications

1. Composés répondant à la formule générale

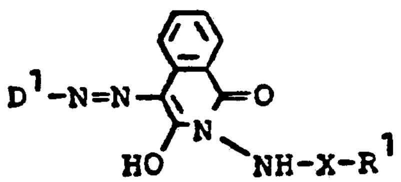

dans laquelle
$D^1$ est un groupement phényle ou 1-anthrachinoyle éventuellement substitué par du chlore, du brome ou un radical nitro ou méthoxy,
$R^1$ est un groupement méthyle ou un groupement phényle éventuellement substitué par du chlore, du brome ou un groupement benzoylamino, et
X est un radical CO ou $SO_2$.

2. Utilisation des comosés selon la revendication 1 en tant que pigments, en particulier dans les encres d'impression.